# EUROPEAN PATENT SPECIFICATION

(11) **EP 2 393 139 B1**
(45) Date of publication and mention of the grant of the patent: **20.02.2013**
(21) Application number: 10195856.9
(22) Date of filing: 20.12.2010
(51) Int. Cl.: H01M 2/10, H01M 10/42, H01M 10/50

(54) **Battery pack**
Batteriepack
Bloc-batteries

(30) Priority: 03.06.2010 KR 20100052330
(43) Date of publication of application: 07.12.2011
(73) Proprietor: SB LiMotive Co., Ltd., Suwon-si Gyeonggi-do (KR)
(72) Inventor: Sohn, Kwon, Gyeonggi-do (KR)
(74) Representative: Gulde Hengelhaupt Ziebig & Schneider

(56) References cited:
- WO-A1-2010/016771
- DE-A1-102008 051 897
- JP-A- 2005 349 955
- JP-A- 2008 159 440
- US-A- 5 836 383

## Description

Embodiments according to the present invention relate to a battery pack.

### Description of Related Art

In general, secondary batteries are capable of being discharged and recharged and can be repeatedly used. Low-capacity secondary batteries, each including a single unit cell, are widely used in small portable electronic devices, such as mobile phones, notebook type computers, cameras, camcorders, and the like. On the other hand, large-capacity secondary batteries, each including multiple battery cells, may be used as motor driving power sources, such as in a hybrid electric vehicle (HEV), an electric vehicle (EV), an electric scooter, or the like.

The battery pack used as a large-capacity motor driving power source generates a large amount of heat by repeated charge (e.g., recharge) and/or discharge operations. The generated heat may deteriorate the battery cells. Accordingly, it is desirable to provide a battery pack having improved heat dissipation capability.

German patent application DE 10 2008 051 897 A1 discloses a battery pack comprising a plurality of battery cells, and a cooling part comprising five plates sequentially arranged adjacent the plurality of battery cells, wherein four of the five plates comprise openings so that a cooling liquid may circulate and thus transfer heat from the battery pack to the ambient.

### SUMMARY

Embodiments of the present invention provide a battery pack which is capable of efficiently dissipating heat generated from battery cells by increasing heat exchange efficiency using coolant (e.g., a cooling water or liquid), and which does not require a separate driver for driving the flow of coolant by causing the coolant to flow in a natural, uncompelled manner.

Embodiments of the present invention provide a battery pack including a plurality of battery cells, a cooling part coupled to the plurality of battery cells and including a plurality of cooling plates including a first plate having a coolant inlet opening and a coolant exhaust opening, a second plate having a coolant flow passage, and a third plate, wherein the plurality of cooling plates are sequentially arranged adjacent the plurality of battery cells, and a coolant reservoir for supplying coolant to the first plate and for receiving the coolant from the first plate. The battery pack further includes a wick located in the coolant flow passage of the second plate.

The second plate includes a first layer contacting the first plate, a second layer contacting the first layer, and a third layer between the second layer and the third plate.

The first layer includes a first coolant inlet opening for receiving the coolant from the first plate, a first cooiant transfer opening for causing the coolant to be spread in the first layer, a first coolant collecting opening for causing the coolant to be collected in the first layer, and a first coolant exhaust opening for causing the coolant to be exhausted to the first plate.

The second layer includes a second coolant inlet opening coupled to the first coolant inlet opening, a second coolant exhaust opening coupled to a first side of the first coolant transfer opening, a second coolant transfer opening coupled to a second side of the first coolant transfer opening, and a second coolant collecting opening coupled to the first coolant collecting opening

The third layer includes a third coolant inlet opening coupled to the second coolant inlet opening, a third coolant transfer opening coupled to the second coolant transfer opening, and a third coolant collecting opening coupled to the second coolant collecting opening.

The coolant flow passage may be between the first plate and the third plate and may include a plurality of openings in the second plate.

The battery pack may further include a thermal pad between the plurality of battery cells and the first plate.

The first plate and the third plate may include a thermally conductive material. Preferably, the thermal conductivity of the first and third plates is greater than 100 W/(m·K), more preferably greater than 200 W/(m·K).

The first plate and the third plate may include a metallic material. Preferably, the first plate and the third plate include aluminium.

The cooling part may further include a connection part located at one side of the first plate and including a first connection opening coupled to the coolant inlet opening, and a second connection opening coupled to the coolant exhaust opening, and the coolant reservoir may include a first connection conduit coupled to the first connection opening, and a second connection conduit coupled to the second connection opening.

The wick may include a first metal line and a second metal line in a mesh type arrangement.

The second plate may include an adiabatic material, i.e. a thermally insulating material. Preferably, the thermal conductivity of the second plate is lower than 2 W/(m·K), more preferably lower than 1 W/(m·K).

The second plate may include a plastic material.

The third layer may have a pulsation flow preventing opening or a weight reducing opening.

At least one of the second plate and the third plate may have a pulsation flow preventing opening or a weight reducing opening.

The plurality of cooling plates may be located on bottom surfaces of the plurality of battery cells.

The battery pack may further include a housing case for covering the plurality of battery cells and a majority of the cooling part while exposing the third plate.

The battery pack may further include a heat sink installed in the third plate.

As described above, a battery pack according to embodiments of the present invention includes a plurality of cooling plates having a cooling water flow passage, thereby increasing heat exchange efficiency using cooling water. Accordingly, since the battery pack according to embodiments of the present invention efficiently dissipates heat generated from battery cells, it is possible to delay or prevent deterioration of the battery pack.

In addition, the battery pack according to embodiments of the present invention includes wicks formed in a plurality of cooling plates, thereby allowing cooling water to flow in a natural, uncompelled manner. Therefore, the battery pack according to embodiments of the present invention does not require a separate driver for driving the flow of the cooling water, thereby reducing a manufacturing cost of the battery pack.

Additional aspects and/or features of embodiments of the present invention will be set forth in the following part of the description and, in part, will be obvious from the description, or may be learned by practice from the presented embodiments.

### BRIEF DESCRIPTION OF THE DRAWINGS

The features and aspects of embodiments of the present invention will be more apparent from the following detailed description in conjunction with the accompanying drawings, in which:

FIG. 1 is a schematic block diagram of a battery pack according to an embodiment of the present invention:

FIG. 2 is a perspective view of the embodiment of the battery pack shown in FIG. 1, from which a housing case is removed;

FIG. 3 is an exploded perspective view partially illustrating a cooling part of the embodiment of the battery pack shown in FIG. 1;

FIG. 4 is a cross-sectional view partially illustrating a first layer of the cooling part of the embodiment of the battery pack shown in FIG. 3; and

FIG. 5 schematically illustrates a cooling water (e.g., cooling liquid) flow passage formed in a cooling part of the embodiment of the battery pack shown in FIG. 1.

### DETAILED DESCRIPTION

Hereinafter, embodiments of the present invention will be described in detail with reference to the accompanying drawings.

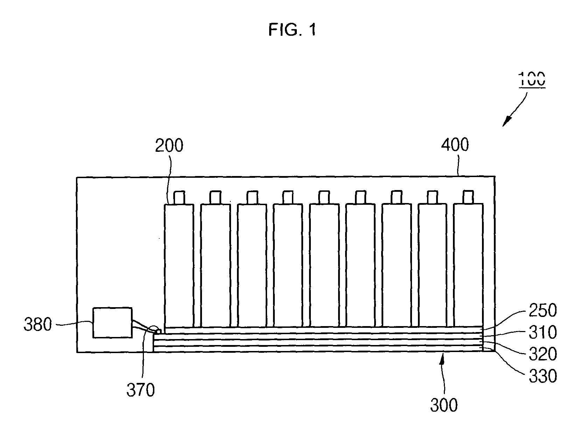

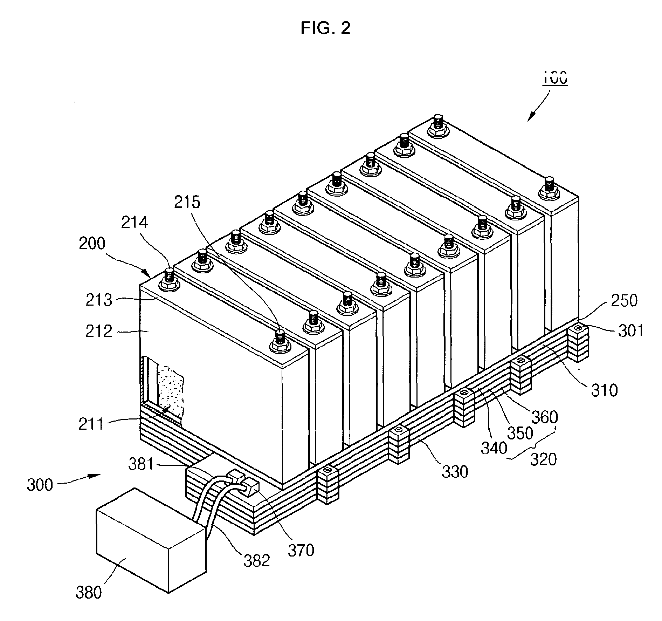

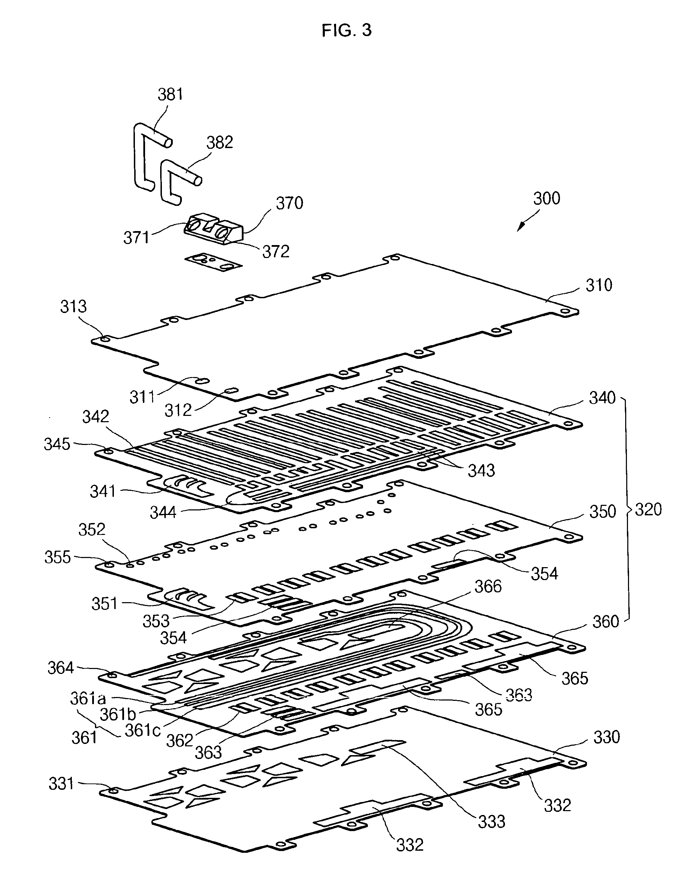

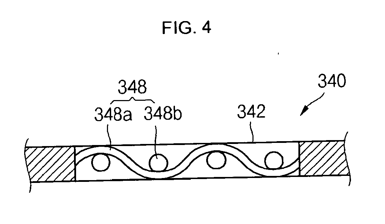

FIG. 1 is a schematic block diagram of a battery pack according to an embodiment of the present invention; FIG. 2 is a perspective view of the embodiment of the battery pack shown in FIG. 1, from which a housing case is removed; FIG. 3 is an exploded perspective view partially illustrating a cooling part of the embodiment of the battery pack shown in FIG. 1; and FIG. 4 is a cross-sectional view partially illustrating a first layer of the cooling part of the embodiment of the battery pack shown in FIG. 3.

Referring to FIGS. 1 and 2, the battery pack 100 according to an embodiment of the present invention includes a plurality of battery cells 200, a cooling part 300, and a housing case 400.

The plurality of battery cells 200 are arranged in a line (e.g., they are substantially aligned with each other) and are coupled to each other in series or in parallel by a connection member. The plurality of battery cells 200 may be coopled to external electronic devices may perform discharge operations for supplying power to the external electronic devices, and/or may perform charge (e.g., recharge) operations for receiving power from the external electronic devices.

Each of the plurality of battery cells 200 includes an electrode assembly 211 having a positive electrode plate and a negative electrode plate with a separator interposed therebetween, a case 212 providing for a space in which the electrode assembly 211 is housed, a cap assembly 213 coupled to the case 212 to hermetically seal the case 212, and a positive electrode terminal 214 and a negative electrode terminal 215 electrically coupled to the positive electrode plate and the negative electrode plate, respectively, and protruding outside the cap assembly 213. Here, the plurality of battery cells 200 may generate unwanted heat in the course of performing the discharge or charge operations.

The cooling part 300 is coupled to the plurality of battery cells 200, and cools the plurality of battery cells 200 using coolant (e.g., cooling water or liquid). To this end, the cooling part 300 includes a plurality of cooling plates 310, 320, and 330, a connection part 370, and a coolant reservoir 380 (e.g., a cooling water reservoir). Here, the cooling part 300 may be in a vacuum state (e.g., vacuum sealed). Hereinafter, the battery pack and the cooling part will be described with cooling water as coolant, but the present invention is not limited thereto.

The plurality of cooling plates 310, 320, and 330 are disposed on the bottom surfaces of the plurality of battery cells 200, and include coolant (e.g., cooling water) flow passages for coolant (e.g., cooling water) used to cool the plurality of battery cells 200. The plurality of cooling plates 310, 320, and 330 may be defined as a first plate 310, a second plate 320, and a third plate 330, which are disposed sequentially in order of their distance from the plurality of battery cells 200.

The first plate 310 is closest to, and contacts, the plurality of battery cells 200, and forms an inner layer of the plurality of cooling plates 310, 320, and 330. The first plate 310 transfers heat generated from the plurality of battery cells 200 to the second plate 320. To this end, the first plate 310 may be made of a metal having high thermal conductivity, such as aluminum, and has an area substantially entirely contacting the plurality of battery cells 200. Here, the first plate 310 has protruding areas extending from portions of its outer periphery. A cooling water inlet hole 311, a cooling water exhaust hole 312, and inside coupling holes 313 are formed in the protruding areas. It should be noted that throughout this specification and the claims that follow, the term "hole" may refer to one or more holes, or any other openings having various shapes.

The cooling water inlet hole 311 allows cooling water to be injected (e.g., at first) into the plurality of cooling plates 310, 320, and 330, and the cooling water exhaust hole 312 allows cooling water to be exhausted (e.g., lastly) from the plurality of cooling plates 310, 320, and 330. The inside coupling holes 313 allow a connection member, which couples the first plate 310, the second plate 320, and the third plate 330 to one another, to pass therethrough. Meanwhile, a thermal pad may be interposed between the first plate 310 and each of the plurality of battery cells 200 for the purpose of increasing heat dissipating efficiency of the plurality of battery cells 200.

The second plate 320 contacts the first plate 310 and forms an intermediate layer of the plurality of cooling plates 310, 320, and 330. The second plate 320 includes (e.g., includes as implemented) the cooling water flow passage, and a plurality of holes for forming the cooling water flow passage are provided between the first plate 310 and the third plate 330. The second plate 320 provides a space in which the cooling water flowing through the cooling water flow passage performs heat exchange with the plurality of battery cells 200 to cool the plurality of battery cells 200. The cooling water having performed heat exchange (e.g., through the second plate 320) may be in a mixed state of a liquid phase and vapor phase, or may be in a vapor state. Here, a wick 348 having a shape of, for example, a metal mesh, may be formed in some portions of the cooling water flow passage. The wick 348 generates a capillary force that drives the flow of cooling water, thereby allowing the cooling water to flow in a natural, uncompelled manner.

In addition, the second plate 320 may be made of an adiabatic material, for example, a plastic material, to allow the flow of cooling water to be adjusted by heat capacity of (e.g., the heat received from) the plurality of battery cells 200. When a large amount of heat generated from the plurality of battery cells 200 is transferred through the first plate 310, the second plate 320 adjusts the cooling water to flow quickly. However, when a small amount of heat generated from the plurality of battery cells 200 is transferred through the first plate 310, the second plate 320 adjusts the cooling water to flow slowly. Here, if the second plate 320 were made of a thermally conductive material, the heat generated from the plurality of battery cells 200 transferred through the first plate 310 would be approximately uniform, so that the second plate 320 might not be able to adjust the flow of cooling water.

In addition, the second plate 320 includes multiple layers, for example, a first layer 340, a second layer 350, and a third layer 360.

The first layer 340 contacts the first plate 310 and has a size substantially corresponding to (e.g. the same as, or similar to) a size of the first plate 310. The first layer 340 includes a first cooling water inlet hole 341, a first cooling water transfer hole 342, a first cooling water collecting hole 343, a first cooling water exhaust hole 344, and first coupling holes 345.

The first cooling water inlet hole 341 is formed to be coupled to the cooling water inlet hole 311, and cooling water is injected into the first cooling water inlet hole 341 from (e.g., through) the first plate 310. Here, the first cooling water inlet hole 341 may include a plurality of holes. The first cooling water transfer hole 342 is formed to cause cooling water to be spread in the first layer 340. The first cooling water collecting hole 343 is formed to cause cooling water to be collected from the first layer 340. The first cooling water exhaust hole 344 is coupled to the cooling water exhaust hole 312 and causes cooling water to be exhausted to (e.g., through) the first plate 310. The first coupling holes 345 are coupled to (e.g., aligned with) the inside coupling holes 313 of the first plate 310 to allow a coupling member 301 to pass therethrough, the coupling member 301 coupling the first plate 310, the second plate 320, and the third plate 330 to one another.

The first layer 340 is closest to, and contacts, the first plate 310 and plays a major role in cooling down heat transferred through the first plate 310 from the plurality of battery cells 200. Therefore, in order to facilitate the flow of cooling water used in the first layer 340 to cool the plurality of battery cells 200, a wick 348 may be formed in each of the first cooling water inlet hole 341, the first cooling water transfer hole 342, the first cooling water collecting hole 343, and the first cooling water exhaust hole 344, forming a cooling water flow passage of the first layer 340. For example, FIG. 4 illustrates that the wick 348 is formed in the first cooling water transfer hole 342 in a metal mesh type (e.g., mesh shape, or mesh arrangement). Specifically, the wick 348 may include a first metal line 348a and a second metal line 318b in a mesh type arrangement.

The second layer 350 contacts the first layer 340 and has a size substantially corresponding to (e.g., the same as, or similar to) the size of the first layer 340. The second layer 350 includes a second cooling water inlet hole 351, a second cooling water exhaust hole 352, a second cooling water transfer hole 353, a second cooling water collecting hole 354, and second coupling holes 355.

The second cooling water inlet hole 351 is formed to be coupled to the first cooling water inlet hole 341, and cooling water is injected into the second cooling water inlet hole 351 from the first layer 340. Here, like the first cooling water inlet hole 341, the second cooling water inlet hole 351 may include a plurality of holes. The second cooling water exhaust hole 352 is coupled to one side of the first cooling water transfer hole 342 to allow cooling water to be injected into the first layer 340 from the second layer 350. The second cooling water transfer hole 353 is coupled to the other side of the first cooling water transfer hole 342 to allow cooling water to be injected into the second layer 350 from the first layer 340. The second cooling water collecting hole 354 is coupled to the first cooling water collecting hole 343 to allow cooling water to be injected into the first layer 340 from the second layer 350. The second coupling holes 355 are formed to be coupled to the first coupling holes 345 of the first layer 340 to allow the coupling member 301 to pass therethrough, the coupling member 301 coupling the first plate 310, the second plate 320, and the third plate 330 to one another.

The third layer 360 contacts the second layer 350 and has a size substantially corresponding to (e.g., the same as, or similar to) the size of the second layer 350. The third layer 360 includes a third cooling water inlet hole 361, a third cooling water transfer hole 362, a third cooling water collecting hole 363, and third coupling holes 364.

The third cooling water inlet hole 361 is formed to be coupled to the second cooling water inlet hole 351 and cooling water is injected into the third cooling water inlet hole 361 from the second layer 350. Here, like the second cooling water inlet hole 351, the third cooling water inlet hole 361 may include a plurality of holes. The plurality of holes may extend in a horizontal direction (e.g., within a planar direction of the third layer 360) to form a plurality of tracks 361 a, 361 b, and 361 c. The third cooling water inlet hole 361 allows the cooling water injected from the second layer 350 to be distributed in the third layer 360 and then to flow. The third cooling water transfer hole 362 is coupled to the second cooling water transfer hole 353. The third cooling water collecting hole 363 is coupled to the second cooling water collecting hole 354. The third coupling holes 364 are formed to be coupled to the second coupling holes 355 of the second layer 350, and to allow the coupling member 301 to pass therethrough, the coupling member 301 coupling the first plate 310, the second plate 320, and the third plate 330 to one another. Meanwhile, the third layer 360 may further include a pulsation flow preventing hole 365 for reducing cooling water from flowing in an irregular manner, and a weight reducing hole 366 for reducing weights of the plurality of cooling plates 310, 320, and 330 (e.g., reducing the overall weight of the plurality of cooling plates). Here, the pulsation flow preventing hole 365 may be used as a reservoir for refilling cooling water.

The third plate 330 contacts the second plate 320, for example, the third layer 360 of the second plate 320, and forms an outer layer of the plurality of cooling plates 310, 320, and 330. After the cooling water has undergone heat exchange through the second plate 320, the third plate 330 dissipates the heat of the cooling water to the outside. Accordingly, the cooling water performs heat exchange with the outside in the third plate 330. The cooling water having performed heat exchange through the third plate 330 may be in a mixed state of a liquid phase and vapor phase, or may be in a liquid state.

The third plate 330, like the first plate 310, is made of a metal having high thermal conductivity, such as aluminum, and has an area substantially entirely contacting the third layer 360. The third plate 330 includes outer coupling holes 331 coupled to (e.g., aligned with) third coupling holes 364 of the third layer 360. In addition, the third plate 330 may further include a pulsation flow preventing hole 332, and may also further include a weight reducing hole 333, which may be similar to the aforementioned pulsation flow preventing hole 365 and weight reducing hole 366, respectively. Meanwhile, a heat sink may further be installed in the third plate 330 for the purpose of increasing heat dissipation efficiency.

The connection part 370 includes a first connection hole 371 and a second connection hole 372 at one side of the first plate 310, the first connection hole 371 coupled to the cooling water inlet hole 311, and the second connection hole 372 coupled to the cooling water exhaust hole 312. The connection part 370 allows the cooling water fed from the cooling water reservoir 380 to be injected into the cooling water inlet hole 311 through the first connection hole 371, and allows the cooling water exhausted from the cooling water exhaust hole 312 to be returned to the cooling water reservoir 380 through the second connection hole 372.

The cooling water reservoir 380 is formed to store cooling water, and includes a first connection conduit 381 coupled to the first connection hole 371, and a second connection conduit 382 coupled to the second connection hole 372. The cooling water reservoir 380 supplies the first plate 310 with cooling water through the first connection conduit 381, and restores (e.g., receives) cooling water from the first plate 310 through the second connection conduit 382.

The housing case 400 covers the plurality of battery cells 200 and the cooling part 300 except for one surface of the third plate 330, which remains exposed, thereby forming an external appearance of the battery pack 100. The housing case 400 may be configured such that heat of the battery pack 100 is dissipated through the third plate 330.

Now, the cooling water flow passage will be described in detail. Here, cooling water is fed from the cooling water reservoir 380 to cool the plurality of battery cells 200 and is then returned to the cooling water reservoir 380.

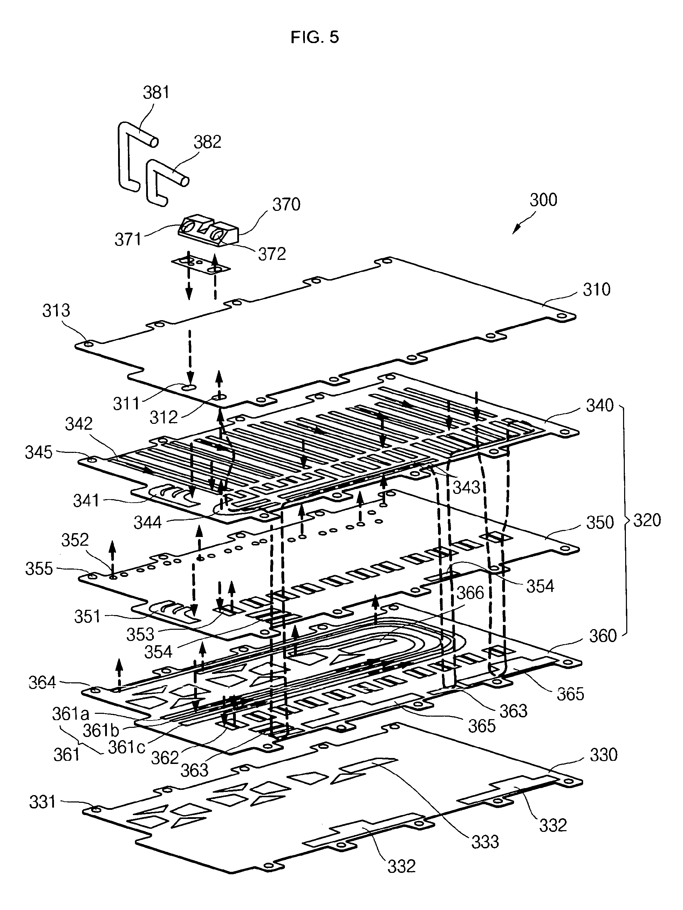

FIG. 5 schematically illustrates a cooling water flow passage formed in the cooling part of the battery pack of the embodiment shown in FIG. 1.

Referring to FIG. 5, first, the cooling water fed from the cooling water reservoir 380 (see FIG. 2) flows through the first connection conduit 381, the first connection hole 371, the cooling water inlet hole 311, the first cooling water inlet hole 341, the second cooling water inlet hole 351, and the third cooling water inlet hole 361. The cooling water flows along the plurality of tracks 361 a, 361 b, and 361 c of the third cooling water inlet hole 361. Here, the cooling water may be in a liquid phase.

Thereafter, the cooling water passes through the second cooling water exhaust hole 352 to then be injected into the first cooling water transfer hole 342. Here, the cooling water flows through the first cooling water transfer hole 342 and undergoes heat exchange with the plurality of battery cells 200 (e.g., while in the first layer 340) to be in a mixed state of a liquid phase and a vapor phase, or in a vapor state. Then, the cooling water passes through the second cooling water transfer hole 353 to reach the third cooling water transfer hole 362.

Then, the cooling water flows from the third cooling water transfer hole 362 back to the second cooling water transfer hole 353 and the first cooling water exhaust hole 344, and is then exhausted through the cooling water exhaust hole 312. In addition, the cooling water flows from part of the third cooling water transfer hole 362 to the third cooling water collecting hole 363, to the second cooling water collecting hole 354, to the first cooling water collecting hole 343, and to the first cooling water exhaust hole 344, and is then exhausted through the cooling water exhaust hole 312. Here, the cooling water performs heat exchange with the outside through the third plate 330 (e.g., while in the third layer 360), so that it may be in a mixed state of a liquid phase and a vapor phase, or in a liquid state. The cooling water exhausted through the cooling water exhaust hole 312 is returned to the cooling water reservoir 380 through the second connection conduit 382.

As described above, the battery pack 100 according to the embodiment of the present invention includes the plurality of cooling plates 310, 320, and 330 having a cooling water flow passage, thereby increasing heat exchange efficiency using cooling water. Therefore, the battery pack 100 can efficiently dissipate heat of the plurality of battery cells 200, thereby preventing (e.g., reducing the rate of) deterioration of the plurality of battery cells 200 due to heat.

In addition, the battery pack 100 according to embodiments of the present invention includes the wick 348 in each of the plurality of cooling plates 310, 320, and 330, thereby allowing cooling water to flow in a natural, uncompelled manner. Therefore, the battery pack 100 does not require a separate driver for driving the flow of cooling water, thereby reducing the manufacturing cost.

## Claims

1. A battery pack (100) comprising:
a plurality of battery cells (200);
a cooling part (300) coupled to the plurality of battery cells (200) and comprising a plurality of cooling plates (310, 320, 330) comprising:
a first plate (310) having a coolant inlet opening (311) and a coolant exhaust opening (312);
a second plate (320) having a coolant flow passage; and
a third plate (330),
wherein the plurality of cooling plates (310, 320, 330) are sequentially arranged adjacent the plurality of battery cells (200); and
a coolant reservoir (380) for supplying coolant to the first plate (310) and for receiving the coolant from the first plate (310),
wherein the second plate (320) comprises:
a first layer (340) contacting the first plate (310);
a second layer (350) contacting the first layer (340); and
a third layer (360) between the second layer (350) and the third plate (330), and
**characterized by**
a wick (348) located in the coolant flow passage of the second plate (320);
wherein the first layer (340) comprises:
at least one first coolant inlet opening (341) for receiving the coolant from the first plate (310);
a plurality of first coolant transfer openings (342) for causing the coolant to be spread in the first layer (340), the first coolant transfer openings (342) having the shape of a stripe arranged parallel to a short side of the first layer (340);
at least one first coolant collecting opening (343) for causing the coolant to be conceded in the first layer (340), the first coolant collecting opening (343) having the shape of a comb with teeth parallel to the first coolant transfer openings (342); and
at least one first coolant exhaust opening (344) for causing the coolant to be exhausted to the first plate (310),
wherein the second layer (350) comprises:
at least one second coolant inlet opening (351) coupled to the at least one first coolant inlet opening (341);
at least one second coolant exhaust opening (352) coupled to a first side of the at least one first coolant transfer opening (342);
at least one second coolant transfer opening (353) coupled to a second side of the at least one first coolant transfer opening (342); and
at least one second coolant collecting opening (354) coupled to the at least one first coolant collecting opening (343), and
wherein the third layer (360) comprises:
at least one third coolant inlet opening (361) coupled to the at least one second coolant inlet opening (351);
at least one third coolant transfer opening (362) coupled to the at least one second cooiant transfer opening (353);and
at least one third coolant collecting opening (363) coupled to the at least one second coolant collecting opening (354).

2. The battery pack of claim 1, wherein the coolant flow passage is between the first plate (310) and the third plate (330) and comprises a plurality of openings in the second plate (320).

3. The battery pack of one of the preceding claims, further comprising a thermal pad between the plurality of battery cells (200) and the first plate (310).

4. The battery pack of one of the preceding claims wherein the first plate (310) and the third plate (330) comprise a metallic material, and/or
wherein the second plate (320) comprises a plastic material.

5. The battery pack of one of the preceding claims, wherein the cooling part (300) further comprises a connection part (370) located at one side of the first plate (310) and comprising:
a first connection opening (371) coupled to the coolant inlet opening (311); and
a second connection opening (372) coupled to the coolant exhaust opening (312), and wherein the coolant reservoir (380) comprises:
a first connection conduit (381) coupled to the first connection opening (371); and
a second connection conduit (382) coupled to the second connection opening (372).

6. The battery pack of one of the preceding claims, wherein the wick (348) comprises a first metal line (348a) and a second metal line (348b) in a mesh type arrangement.

7. The battery pack of one of one of the preceding claims, wherein the third layer (360) has at least one pulsation flow preventing opening (365) and/or at least one weight reducing opening (366).

8. The battery pack of one of the preceding claims, wherein at least one of the second plate (320) and the third plate (330) has a pulsation flow preventing opening (365, 332) and/or a weight reducing opening (366, 333).

9. The battery pack of one of the preceding claims, wherein the plurality of cooling plates (310, 320, 330) is located on bottom surfaces of the plurality of battery cells (200).

10. The battery pack of one of the preceding claims, further comprising a housing case (400) for covering the plurality of battery cells (200) and a majority of the cooling part (300) while exposing the third plate (330), and/or
further comprising a heat sink installed in the third plate (330).

## Patentansprüche

1. Batteriepack (100), aufweisend:
eine Vielzahl von Batteriezellen (200);
einen Kühlungsteil (300), der mit der Vielzahl von Batteriezellen (200) gekoppelt ist und eine Vielzahl von Kühlungsplatten (310, 320, 330) aufweist, die Folgendes aufweisen:
eine erste Platte (310), die eine Kühlmitteleinlassöffnung (311) und eine Kühlmittelauslassöffnung (312) aufweist;
eine zweite Platte (320), die einen Kühlmittelströmungskanal aufweist; und
eine dritte Platte (330),
wobei die Vielzahl der Kühlungsplatten (310, 320, 330) aufeinanderfolgend benachbart zu der Vielzahl der Batteriezellen (200) angeordnet ist; und
einen Kühlmittelbehälter (380) zum Versorgen der ersten Platte (310) mit Kühlmittel und zum Erhalt des Kühlmittels von der ersten Platte (310),
wobei die zweite Platte (320) aufweist:
eine erste Schicht (340), die mit der ersten Platte (310) in Kontakt steht;
eine zweite Schicht (350), die mit der ersten Schicht (340) in Kontakt steht; und
eine dritte Schicht (360) zwischen der zweiten Schicht (350) und der dritten Platte (330), und
**gekennzeichnet durch**
einen Docht (348), der im Kühlmittelströmungskanal der zweiten Platte (320) angeordnet ist;
wobei die erste Schicht (340) aufweist:
zumindest eine erste Kühlmitteleinlassöffnung (341) zum Erhalt des Kühlmittels von der ersten Platte (310);
eine Vielzahl erster Kühlmittelübertragungsöffnungen (342), die bewirken, dass das Kühlmittel in der ersten Schicht (340) verteilt wird, wobei die ersten Kühlmittelübertragungsöffnungen (342) die Form eines Streifens aufweisen, der parallel zu einer kurzen Seite der ersten Schicht (340) angeordnet ist;
zumindest eine erste Kühlmittelsammelöffnung (343), die bewirkt, dass das Kühlmittel in der ersten Schicht (310) gesammelt wird, wobei die erste Kühlmittelsammelöffnung (343) die Form eines Kamms mit Zähnen parallel zu den ersten Kühlmittelübertragungsöffnungen (342) aufweist; und
zumindest eine erste Kühlmittelauslassöffnung (344), die bewirkt, dass das Kühlmittel zur ersten Platte (310) ausgelassen wird,
wobei die zweite Schicht (350) aufweist:
zumindest eine zweite Kühlmitteleinlassöffnung (351), die mit der zumindest einen ersten Kühlmitteleinlassöffnung (341) gekoppelt ist;
zumindest eine zweite Kühlmittelauslassöffnung (352), die mit einer ersten Seite der zumindest einen ersten Kühlmittelübertragungsöffnung (342) gekoppelt ist;
zumindest eine zweite Kühlmittelübertragungsöffnung (353), die mit einer zweiten Seite der zumindest einen ersten Kühlmittelübertragungsöffnung (342) gekoppelt ist; und
zumindest eine zweite Kühlmittelsammelöffnung (354), die mit der zumindest einen ersten Kühlmittelsammelöffnung (343) gekoppelt ist, und wobei die dritte Schicht (360) aufweist:
zumindest eine dritte Kühlmitteleinlassöffnung (361), die mit der zumindest einen zweiten Kühlmitteleinlassöffnung (351) gekoppelt ist;
zumindest eine dritte Kühlmittelübertragungsöffnung (362), die mit der zumindest einen zweiten Kühlmittelübertragungsöffnung (353) gekoppelt ist; und
zumindest eine dritte Kühlmittelsammelöffnung (363), die mit der zumindest einen zweiten Kühlmittelsammelöffnung (354) gekoppelt ist.

2. Batteriepack nach Anspruch 1, wobei der Kühlmittelströmungskanal zwischen der ersten Platte (310) und der dritten Platte (330) ist und eine Vielzahl von Öffnungen in der zweiten Platte (320) aufweist.

3. Batteriepack nach einem der vorhergehenden Ansprüche, weiterhin aufweisend ein Wärmekissen zwischen der Vielzahl der Batteriezellen (200) und der ersten Platte (310).

4. Batteriepack nach einem der vorhergehenden Ansprüche, wobei die erste Platte (310) und die dritte Platte (330) ein Metallmaterial aufweisen, und/oder
wobei die zweite Platte (320) ein Kunststoffmaterial aufweist.

5. Batteriepack nach einem der vorhergehenden Ansprüche, wobei der Kühlungsteil (300) weiterhin einen Verbindungsteil (370) aufweist, der auf einer Seite der ersten Platte (310) angeordnet ist und Folgendes aufweist:
eine erste Verbindungsöffnung (371), die mit der Kühlmitteleinlassöffnung (311) gekoppelt ist, und
eine zweite Verbindungsöffnung (372), die mit der Kühlmittelauslassöffnung (312) gekoppelt ist,
und wobei der Kühlmittelbehälter (380) aufweist:
eine erste Verbindungsleitung (381), die mit der ersten Verbindungsöffnung (371) gekoppelt ist; und
eine zweite Verbindungsleitung (382), die mit der zweiten Verbindungsöffnung (372) gekoppelt ist.

6. Batteriepack nach einem der vorhergehenden Ansprüche, wobei der Docht (348) eine erste Metallleitung (348a) und eine zweite Metallleitung (348b) in einer maschenartigen Anordnung aufweist.

7. Batteriepack nach einem der vorhergehenden Ansprüche, wobei die dritte Schicht (360) zumindest eine Öffnung (365) zum Verhindern einer Pulsationsströmung und/oder zumindest eine Öffnung (366) zur Reduktion des Gewichts aufweist.

8. Batteriepack nach einem der vorhergehenden Ansprüche, wobei die zweite Platte (320) und/oder die dritte Platte (330) eine Öffnung (365, 332) zum Verhindern einer Pulsationsströmung und/oder eine Öffnung (366, 333) zur Reduktion des Gewichts aufweisen/aufweist.

9. Batteriepack nach einem der vorhergehenden Ansprüche, wobei die Vielzahl der Kühlungsplatten (310, 320, 330) auf Unterseiten der Vielzahl der Batteriezellen (200) angeordnet ist.

10. Batteriepack nach einem der vorhergehenden Ansprüche, weiterhin aufweisend eine Gehäusehülse (400) zum Abdecken der Vielzahl der Batteriezellen (200) und eines Großteils des Kühlungsteils (300), während die dritte Platte (330) freigelegt wird, und/oder
weiterhin aufweisend einen Kühlkörper, der in der dritten Platte (330) eingebaut ist.

## Revendications

1. Batterie d'alimentation (100) comprenant :
une pluralité de cellules de batterie (200) ;
une partie de refroidissement (300) couplée à la pluralité de cellules de batterie (200) et comprenant une pluralité de plaques de refroidissement (310, 320, 330) comprenant :
une première plaque (310) comportant un orifice d'admission de fluide de refroidissement (311) et un orifice d'évacuation de fluide de refroidissement (312) ;
une deuxième plaque (320) comportant un passage d'écoulement de fluide de refroidissement ; et
une troisième plaque (330),
la pluralité de plaques de refroidissement (310, 320, 330) étant disposée de manière séquentielle en position adjacente à la pluralité de cellules de batterie (200) ; et
un réservoir de fluide de refroidissement (380) pour fournir le fluide de refroidissement à la première plaque (310) et pour recevoir le fluide de refroidissement provenant de la première plaque (310),
la deuxième plaque (320) comprenant :
une première couche (340) entrant en contact avec la première plaque (310) ; et
une deuxième couche (350) entrant en contact avec la première couche (340) ; et
une troisième couche (360) entre la deuxième couche (350) et la troisième plaque (330) ; et
**caractérisée par**
une mèche (348) située dans le passage d'écoulement de fluide de refroidissement de la deuxième plaque (320) ;
la première couche (340) comprenant :
au moins un premier orifice d'admission de fluide de refroidissement (341) pour recevoir le fluide de refroidissement provenant de la première plaque (310) ;
une pluralité de premiers orifices de transfert de fluide de refroidissement (342) pour amener le fluide de refroidissement à être étalé dans la première couche (340), les premiers orifices de transfert de fluide de refroidissement (342) ayant la forme d'une bande disposée parallèlement à un petit côté de la première couche (340) ;
au moins un premier orifice collecteur de fluide de refroidissement (341) pour amener le fluide de refroidissement à être collecté dans la première couche (340), le premier orifice collecteur de fluide de refroidissement (343) ayant la forme d'un peigne avec des dents parallèles aux premiers orifices de transfert de fluide de refroidissement (342) ; et
au moins un premier orifice d'évacuation de fluide de refroidissement (344) pour amener le fluide de refroidissement à être évacué à la première plaque (310) ;
la deuxième couche (350) comprenant :
au moins un deuxième orifice d'admission de fluide de refroidissement (351) couplé audit au moins un premier orifice d'admission de fluide de refroidissement (341) ;
au moins un deuxième orifice d'évacuation de fluide de refroidissement (353) couplé à un premier côté dudit au moins un premier orifice de transfert de fluide de refroidissement (342) ;
au moins un deuxième orifice de transfert de fluide de refroidissement (353) couplé à un second côté dudit au moins un premier orifice de transfert de fluide de refroidissement (342) ; et
au moins un deuxième orifice collecteur de fluide de refroidissement (354) couplé audit au moins un premier orifice collecteur de fluide de refroidissement (343) ; et
la troisième couche (360) comprenant :
au moins un troisième orifice d'admission de fluide de refroidissement (361) couplé audit au moins un deuxième orifice d'admission de fluide de refroidissement (351) ;
au moins un troisième orifice de transfert de fluide de refroidissement (262) couplé audit au moins un deuxième orifice de transfert de fluide de refroidissement (353) ; et
au moins un troisième orifice collecteur de fluide de refroidissement (362) couplé audit au moins un deuxième orifice collecteur de fluide de refroidissement (354).

2. Batterie d'alimentation suivant la revendication 1, dans laquelle le passage d'écoulement de fluide de refroidissement est présent entre la première plaque (310) et la troisième plaque (330) et comprend une pluralité d'orifices dans la deuxième plaque (320).

3. Batterie d'alimentation suivant l'une des revendications précédentes, comprenant en outre un tampon thermique entre la pluralité de cellules de batterie (200) et la première plaque (310).

4. Batterie d'alimentation suivant l'une des revendications précédentes, dans laquelle la première plaque (310) et la troisième plaque (330) comprennent une matière métallique, et/ou
dans laquelle la deuxième plaque (320) comprend une matière plastique.

5. Batterie d'alimentation suivant l'une des revendications précédentes, dans laquelle la partie de refroidissement (300) comprend en outre une partie de connexion (370) située au niveau d'un côté de la première plaque (310) et comprenant :
un premier orifice de connexion (371) couplé au premier orifice d'admission de fluide de refroidissement (311) ; et
un second orifice de connexion (372) couplé à l'orifice d'évacuation de fluide de refroidissement (312),
et dans laquelle le réservoir de fluide de refroidissement (380) comprend :
un premier conduit de connexion (381) couplé au premier orifice de connexion (371) ; et
un second conduit de connexion (382) couplé au second orifice de connexion (372).

6. Batterie d'alimentation suivant l'une des revendications précédentes, dans laquelle la mèche (348) comprend une première ligne métallique (348a) et une seconde ligne métallique (348b) disposées sous forme de mailles.

7. Batterie d'alimentation suivant l'une des revendications précédentes, dans laquelle la troisième couche (360) comporte au moins un orifice de prévention d'écoulement pulsé (365) et/ou au moins un orifice de réduction de poids (366).

8. Batterie d'alimentation suivant l'une des revendications précédentes, dans laquelle au moins une de la deuxième plaque (320) et de la troisième plaque (330) comporte un orifice de prévention d'écoulement pulsé (365, 332) et/ou un orifice de réduction de poids (366, 333).

9. Batterie d'alimentation suivant l'une des revendications précédentes, dans laquelle la pluralité de plaques de refroidissement (310, 320, 330) est située sur les surfaces inférieures de la pluralité de cellules de batterie (200).

10. Batterie d'alimentation suivant l'une des revendications précédentes, comprenant en outre un boîtier de réception (400) pour couvrir la pluralité de cellules de batterie (200) et une proportion dominante de la partie de refroidissement (300) tout en exposant la troisième plaque (330), et/ou
comprenant en outre un dissipateur de chaleur installé dans la troisième plaque (330).
